# FASCICULE DE BREVET EUROPEEN

(11) **EP 2 134 221 B1**
(45) Date de publication et mention de la délivrance du brevet: **21.08.2013**
(21) Numéro de dépôt: 08787943.3
(22) Date de dépôt: 11.04.2008
(51) Int. Cl.: A47J 27/04, A47J 43/07

(54) **APPAREIL POUR LA PREPARATION D'ALIMENTS A LA VAPEUR**
VORRICHTUNG ZUR DAMPFGARUNG VON LEBENSMITTELN
APPARATUS FOR THE STEAM PREPARATION OF FOODSTUFFS

(30) Priorité: 17.04.2007 FR 0702781
(43) Date de publication de la demande: 23.12.2009
(73) Titulaire: Seb S.A., 69130 Ecully (FR)
(72) Inventeur: MOREL, Hervé, F-74600 Seynod (FR)
(74) Mandataire: Kiehl, Hubert
(86) Numéro de dépôt international: PCT/FR2008/000508
(87) Numéro de publication internationale: WO 2008/142284

(56) Documents cités:
- GB-A- 2 387 768
- US-A1- 2003 024 402

## Description

La présente invention concerne le domaine technique général des appareils pour la préparation d'aliments, plus particulièrement des appareils pour la cuisson et/ou le réchauffage d'aliments.

Dans le domaine cité, on connaît des appareils tel que décrits dans les documents US2003/0024402 ou EP971616, comportant un générateur de vapeur, un bol amovible recevant un panier de cuisson amovible muni d'ouvertures dans sa partie basse, ledit bol étant fermé par un couvercle amovible. La vapeur sortant du générateur de vapeur traverse le couvercle et doit redescendre à travers les aliments vers le fond du panier. Elle passe ensuite par les ouvertures ménagées dans le fond du panier pour s'échapper par une ouverture ménagée dans la paroi du bol. Ce cheminement de la vapeur présente l'inconvénient d'être en circuit forcé : du haut vers le bas, ce qui favorise la cuisson des aliments situés au dessus du panier et ne garantit donc pas une cuisson homogène. De plus, la vapeur a tendance à monter donc à échauffer le couvercle ou à s'échapper par les interstices entre le bol et le couvercle, voire entre le panier et le bol. Pour compenser ces pertes, il est nécessaire d'injecter plus de vapeur, ce qui a pour conséquence de dégrader le rendement énergétique.

Par ailleurs, étant donné que l'appareil est utilisé également comme mixer, l'ouverture dans la paroi du bol peut provoquer durant la préparation, la sortie du produit mixé par cette ouverture.

On connaît par ailleurs des appareils tels que décrits dans le document FR2838624 qui présentent une construction proche de celle des appareils cités dans le document précédent. La vapeur sortant du générateur de vapeur traverse le couvercle puis est dirigée par un déflecteur vers les aliments. L'échappement de la vapeur se fait par une ouverture dans le couvercle, cet échappement étant ralenti par un autre déflecteur faisant office de chicane. Ce type de cheminement de la vapeur présente les mêmes inconvénients que ceux cités pour le cheminement précédent. De plus, l'entrée et la sortie de la vapeur se faisant dans le couvercle, dans cette construction, la vapeur a tendance à passer directement de l'ouverture d'entrée à l'ouverture de sortie, ce qui va amplifier les écarts de cuisson des aliments entre le haut et le bas du panier et la dégradation du rendement énergétique.

Le but de la présente invention est de remédier aux inconvénients précités et de proposer un appareil pour la préparation d'aliments qui présente un cheminement de la vapeur optimisé pour garantir une parfaite homogénéité de cuisson des aliments.

Un autre but de l'invention est de proposer un appareil pour la préparation d'aliments présentant un cheminement de la vapeur qui garantit un bon rendement énergétique et qui minimise les rejets de vapeur.

Un autre but de l'invention est de proposer un appareil pour la préparation d'aliments de construction simple, facile à fabriquer et à utiliser.

Ces buts sont atteints avec un appareil pour la préparation d'aliments comprenant un générateur de vapeur, un container comportant un bol amovible recevant un panier de cuisson amovible muni de perforations dans sa partie basse, ledit container étant fermé par un couvercle, du fait que la vapeur produite par le générateur, arrivant par une ouverture située dans la partie supérieure du container, est acheminée sous le panier de cuisson par une canalisation, ménagée entre le panier de cuisson et le bol, et s'échappe par au moins un orifice situé dans la partie supérieure du container.

Selon l'invention, l'acheminement de la vapeur sous le panier de cuisson permet d'obtenir ensuite un déplacement du bas vers le haut de la vapeur tout d'abord à travers les perforations du panier puis à travers les aliments à cuire. Ce cheminement par convection naturelle permet un bon transfert des calories de la vapeur vers les aliments et donc optimise la cuisson ou le réchauffage desdits aliments. Ce cheminement vapeur associé à une répartition uniforme des perforations du panier permet également d'obtenir une cuisson homogène et rapide des aliments.

De plus, ce type de cheminement naturel permet de ralentir l'échauffement du couvercle, ledit couvercle ne recevant que la vapeur résiduelle ayant traversé les aliments.

De plus, la canalisation d'acheminement de la vapeur, ménagée entre le panier de cuisson et le bol, permet de créer une canalisation en utilisant le bol et le panier, sans rajouter de pièces et ainsi d'avoir une construction économique.

Avantageusement, la canalisation d'acheminement de la vapeur est formée partiellement par la paroi du bol, l'autre partie de la canalisation étant formée par une partie concave dans la paroi du panier.

On aurait pu, certes, former partiellement la paroi de la canalisation dans le bol. On préfère toutefois réaliser un bol sans aspérité ou relief, permettant une mise en place facile du panier ainsi qu'un nettoyage aisé du bol.

Cette disposition permet également d'avoir des moules d'injection plastique de conception simplifiée pour la réalisation du bol et du panier.

Avantageusement, le couvercle comporte l'ouverture pour l'entrée de la vapeur.

Cette disposition permet d'avoir l'ouverture pour l'entrée de la vapeur au dessus du bord supérieur du bol. Ceci évite d'éventuelles fuites par cette ouverture de la préparation lors du mixage des aliments cuits.

Avantageusement, l'orifice traversant d'évacuation de la vapeur se trouve dans le couvercle.

Cette disposition permet à la vapeur résiduelle de s'échapper, la cuisson ne s'effectuant pas en pression. Cet agencement d'ouverture permet également d'éviter des fuites de préparation lors du mixage des aliments cuits.

Avantageusement, le bol et le panier comprennent chacun des moyens d'orientation l'un vis-à-vis de l'autre.

Cette disposition permet de guider la canalisation du panier par rapport au bol et ainsi d'aligner l'entrée de la vapeur et la canalisation lorsque le container est en place sur la base de l'appareil.

Avantageusement, le bol et le panier comportent chacun des moyens d'appui l'un vis-à-vis de l'autre.

Cette disposition permet à l'utilisateur d'assembler le panier et le bol très facilement, le panier reposant dans le bol sans ajustement particulier.

Avantageusement, le bol est équipé dans sa partie inférieure d'un couteau mixer rotatif, ce couteau étant entraîné au moyen d'un moteur électrique intégré à la base fixe de l'appareil.

Cette disposition permet de réaliser avec le même appareil une opération de mixage des aliments une fois ceux-ci cuits ou réchauffés.

L'invention sera mieux comprise à l'étude des modes de réalisation pris à titre nullement limitatif et illustrés dans les figures annexées dans lesquelles :
- La figure 1 est une vue en coupe verticale du container et schématique du reste de l'appareil.
- La figure 2 est une vue éclatée en perspective du container de l'appareil.
- La figure 3 est une vue éclatée en perspective du container de l'appareil en vue du dessus.

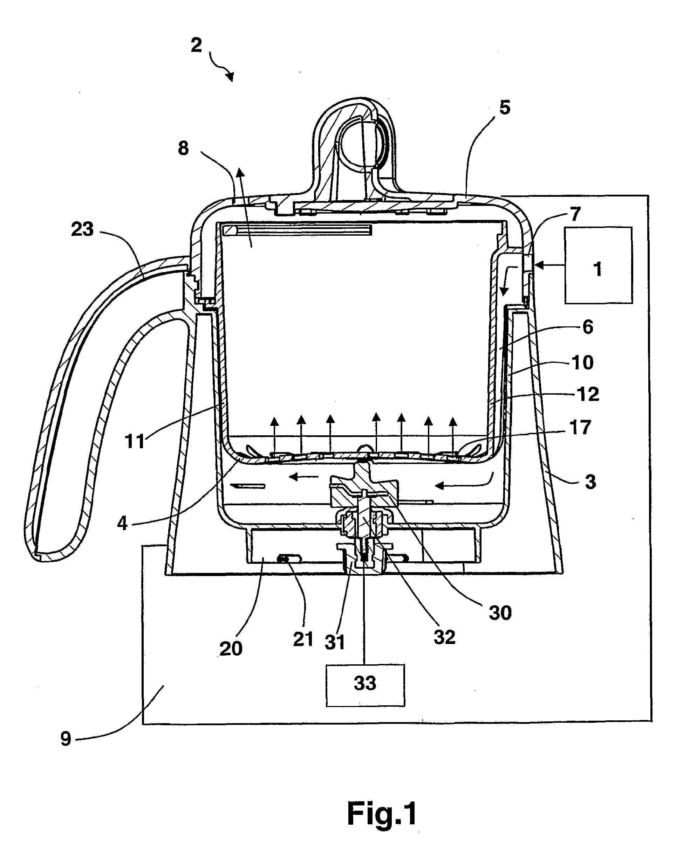

Tel que visible sur la figure 1, l'appareil de cuisson réalisé conformément à l'invention, comporte un générateur de vapeur 1 intégré à une base 9 fixe et un container 2 amovible.

Le container 2 , tel que visible dans les figures de 1 à 3, est constitué d'un bol 3 recevant un panier de cuisson 4 amovible muni de perforations 17 dans sa partie basse et d'un couvercle amovible 5 obturant de façon réversible ledit container 2. Le bol 3 comprend dans sa partie inférieure 20 des moyens d'orientation et de fixation réversibles 21 par rapport à la base fixe 9 (fig.1). Il comprend également une poignée de préhension 23.

Selon l'invention, la vapeur produite par le générateur 1 arrive dans le container 2 par une ouverture 7 puis est acheminée sous le panier de cuisson 4 par une canalisation 6. A partir de là, la vapeur après avoir traversé le panier 4 par les perforations 17 va naturellement remonter dans les aliments à cuire ou à réchauffer. La vapeur excédentaire s'échappe par un orifice 8.

Le bol 3, qui comporte une paroi latérale 10, reçoit le panier 4 dont la paroi latérale 11 comporte sur un côté une partie concave 12 formant partiellement la paroi de la canalisation 6 (fig.1). La partie de la paroi 10 du bol 3 en regard de la partie concave 12 complète la canalisation 6. Le panier 4 comprend dans sa partie inférieure les perforations 17 régulièrement réparties sur sa paroi de fond et se prolongeant légèrement vers le haut.

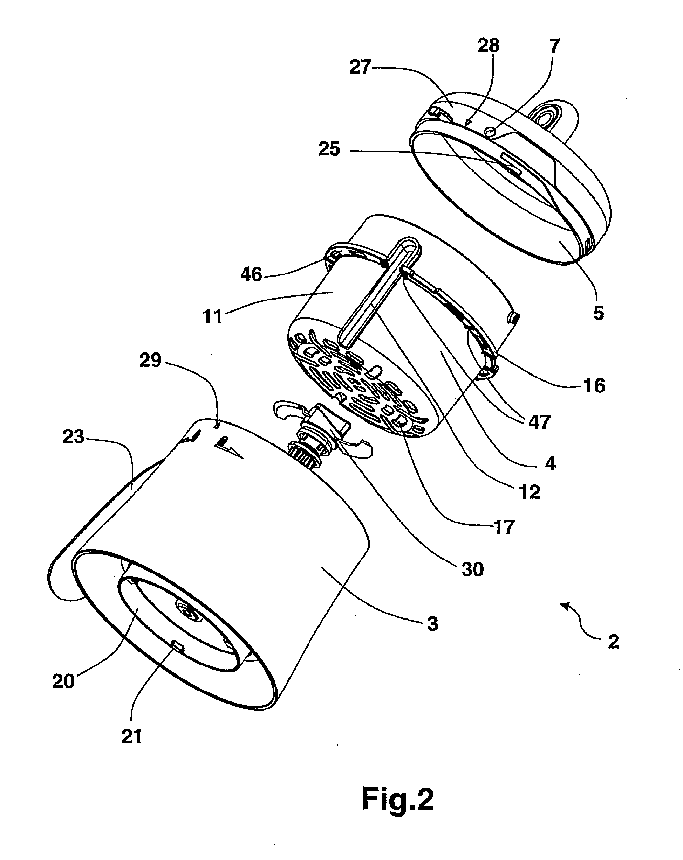

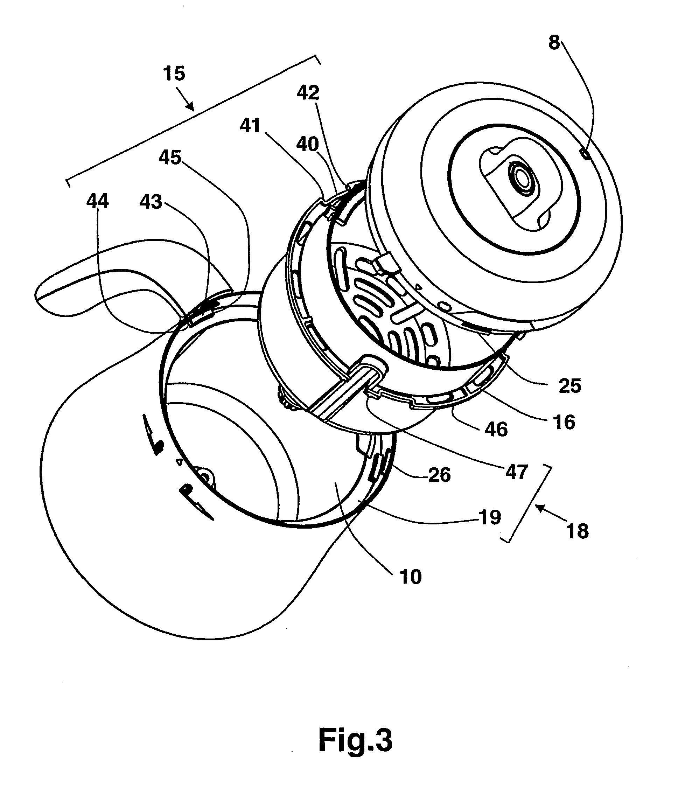

Tel que mieux visible à la figure 2, le panier 4 comporte dans sa partie supérieure une collerette 16 s'étendant radialement à l'extérieur de la paroi 11. Cette collerette 16 comporte une face inférieure 46 munie d'au moins trois nervures transversales 47. La collerette 16 comprend au moins une échancrure 40 (fig.3) possédant deux faces latérales 41, 42. Le bol 3 comporte dans la partie supérieure de la paroi 10 un rebord 19. Ce rebord 19 comprend au moins une excroissance 43 possédant deux faces latérales 44,45.

Le panier 4 et le bol 3 sont positionnés l'un vis-à-vis de l'autre par des moyens d'orientation 15 et des moyens d'appui 18. Les moyens d'orientation 15 sont constitués pour le panier 4 par les deux faces latérales 41,42 de l'échancrure 40 qui coopèrent avec les deux faces 44,45 de l'excroissance 43 pour le bol 3. Les moyens d'appui 18 sont constitués pour le panier 4 par au moins trois nervures transversales 47 de la collerette 16 et pour le bol 3 par le rebord 19.

Le bol 3 et le panier 4 sont réalisés en une matière plastique tel que le polycarbonate (PC) par une technique d'injection.

Le couvercle 5 comporte dans sa partie inférieure des rampes 25 (fig.3) en forme de baïonnettes qui coopèrent avec des ergots 26 situés dans la partie supérieure du bol 3 pour obturer de façon relativement étanche ledit bol.

Le couvercle 5 comporte une paroi latérale 27 munie de l'ouverture traversante 7 qui est destinée, lorsque le container 2 est en place sur la base 9, à mettre en relation de manière relativement étanche la sortie du générateur de vapeur 1 et la partie supérieure de la canalisation 6.

Le couvercle 5 comprend dans sa partie supérieure au moins un orifice 8 traversant pour l'évacuation de la vapeur résiduelle.

Le couvercle 5 et le bol 3 comportent des index 28 et 29 (fig.2) permettant à l'utilisateur d'orienter le couvercle par rapport au bol et ainsi d'aligner la sortie du générateur de vapeur 1 avec l'orifice 8 dans le couvercle.

Le générateur de vapeur 1 destiné à produire la vapeur pour cuire où réchauffer les aliments a une puissance de chauffe comprise entre 700 et 1000 Watts, de préférence 800 Watts.

Selon un aspect avantageux de l'invention, le bol 3 est équipé, dans sa partie inférieure, d'un couteau mixer rotatif 30, ce couteau 30 possédant des moyens d'accouplement 31 avec un arbre moteur 32, cet arbre étant entraîné au moyen d'un moteur électrique 33 intégré dans la base 9 de l'appareil.

En fonctionnement, l'utilisateur saisit la poignée 23 et désaccouple le container 2 de la base 9 en le faisant tourner. Il ôte ensuite le couvercle 5, également en le faisant tourner. Après avoir posé le container 2, il place les aliments à préparer dans le panier 4, referme le couvercle 5 et replace le container 2 sur la base. L'utilisateur remplit le générateur de vapeur 1 avec de l'eau et peut alors démarrer la chauffe.

Sur la figure 1, des flèches représentent le trajet de la vapeur issue du générateur 1 et qui pénètre dans le container 2 par l'ouverture 7 du couvercle 5. La vapeur est ensuite acheminée par la canalisation 6 sous le panier 4 puis, après avoir traversé les ouvertures 17 du panier 4, elle va naturellement remonter au travers des aliments à cuire, garantissant un très bon transfert thermique des calories de la vapeur vers les aliments. Les ouvertures 17 régulièrement positionnées sur la face inférieure du panier 4 répartissent la vapeur de façon homogène. La vapeur excédentaire s'échappe par l'orifice 8.

Une fois la chauffe terminée, l'utilisateur peut mixer la préparation : il désaccouple le container 2 de la base, ôte le couvercle 5 et transfère la préparation du panier 4 dans le bol 3. Il referme le container 2 avec le couvercle 5 et replace le container 2 sur la base. Il peut alors alimenter le moteur qui va entraîner le couteau 30 et provoquer le mixage des aliments.

D'autres variantes et modes de réalisation de l'invention peuvent être envisagés sans sortir du cadre de ces revendications.

## Revendications

1. Appareil pour la préparation d'aliments comprenant un générateur de vapeur (1), un container (2) comportant un bol (3) amovible recevant un panier de cuisson (4) amovible muni de perforations (17) dans sa partie basse, ledit container étant fermé par un couvercle (5), **caractérisé en ce que** la vapeur produite par le générateur (1), arrivant par une ouverture (7) située dans la partie supérieure du container (2), est acheminée sous le panier de cuisson (4) par une canalisation (6), ménagée entre le panier de cuisson (4) et le bol (3), et s'échappe par au moins un orifice (8) situé dans la partie supérieure du container (2).

2. Appareil pour la préparation d'aliments selon la revendication 1, **caractérisé en ce que** la canalisation (6) d'acheminement de la vapeur est formée partiellement par la paroi (10) du bol (3); l'autre partie de la canalisation étant formée par une partie concave (12) dans la paroi (11) du panier (4).

3. Appareil pour la préparation d'aliments selon l'une des revendications 1 à 2, **caractérisé en ce que** le couvercle (5) comporte l'ouverture (7) pour l'entrée de la vapeur.

4. Appareil pour la préparation d'aliments selon l'une des revendications 1 à 3, **caractérisé en ce que** l'orifice traversant (8) d'évacuation de la vapeur se trouve dans le couvercle (5).

5. Appareil pour la préparation d'aliments selon l'une des revendications 1 à 4, **caractérisé en ce que** le bol (3) et le panier (4) comprennent chacun des moyens d'orientation (15) l'un vis-à-vis de l'autre.

6. Appareil pour la préparation d'aliments selon l'une des revendications 1 à 5, **caractérisé en ce que** le bol (3) et le panier (4) comportent chacun des moyens d'appui (18) l'un vis-à-vis de l'autre.

7. Appareil pour la préparation d'aliments selon l'une des revendications 1 à 6, **caractérisé en ce que** le bol (3) est équipé dans sa partie inférieure d'un couteau mixer rotatif (30), ce couteau (30) étant entraîné au moyen d'un moteur électrique intégré à une base (9) fixe de l'appareil.

## Patentansprüche

1. Gerät für die Zubereitung von Lebensmitteln, umfassend einen Dampfgenerator (1), einen Behälter (2), der ein abnehmbares Gefäß (3) umfasst, das einen abnehmbaren Garkorb (4) aufnimmt, der in seinem unteren Teil mit Perforationen (17) versehen ist, wobei der Behälter von einem Deckel (5) verschlossen wird, **dadurch gekennzeichnet, dass** der vom Generator (1) erzeugte Dampf, der durch eine Öffnung (7) eintritt, die sich im oberen Teil des Behälters (2) befindet, unterhalb des Garkorbs (4) durch einen Kanal (6) geleitet wird, der zwischen dem Garkorb (4) und dem Gefäß (3) eingerichtet ist, und durch wenigstens einen Austritt (8) entweicht, der sich im oberen Teil des Behälters (2) befindet.

2. Gerät für die Zubereitung von Lebensmitteln nach Anspruch 1, **dadurch gekennzeichnet, dass** der Kanal (6) zum Leiten des Dampfes teilweise von der Wand (10) des Gefäßes (3) gebildet wird; wobei der andere Teil des Kanals von einem konkaven Teil (12) in der Wand (11) des Korbs (4) gebildet wird.

3. Gerät für die Zubereitung von Lebensmitteln nach einem der Ansprüche 1 bis 2, **dadurch gekennzeichnet, dass** der Deckel (5) die Öffnung (7) für den Eintritt des Dampfes umfasst.

4. Gerät für die Zubereitung von Lebensmitteln nach einem der Ansprüche 1 bis 3, **dadurch gekennzeichnet, dass** sich der durchgängige Austritt (8) zum Abführen des Dampfes im Deckel (5) befindet.

5. Gerät für die Zubereitung von Lebensmitteln nach einem der Ansprüche 1 bis 4, **dadurch gekennzeichnet, dass** das Gefäß (3) und der Korb (4) jeweils Mittel (15) zur gegenseitigen Ausrichtung umfassen.

6. Gerät für die Zubereitung von Lebensmitteln nach einem der Ansprüche 1 bis 5, **dadurch gekennzeichnet, dass** das Gefäß (3) und der Korb (4) jeweils Mittel (18) zur gegenseitigen Auflage umfassen.

7. Gerät für die Zubereitung von Lebensmitteln nach einem der Ansprüche 1 bis 6, **dadurch gekennzeichnet, dass** das Gefäß (3) in seinem Innenteil mit einem drehenden Mixmesser (30) ausgestattet ist, wobei dieses Messer (30) mithilfe eines Elektromotors angetrieben wird, der in einer feststehenden Basis (9) des Gerätes integriert ist.

## Claims

1. A food preparation appliance comprising a steam generator (1), a container (2) comprising a removable bowl (3) receiving a removable cooking basket (4) provided with perforations (17) in its lower portion, said container being closed by a lid (5), **characterised in that** the steam produced by the generator (1), arriving through an opening (7) situated in the upper portion of the container (2), is guided beneath the cooking basket (4) via a channel (6), arranged between the cooking basket (4) and the bowl (3), and escapes through at least one hole (8) situated in the upper portion of the container (2).

2. A food preparation appliance according to claim 1, **characterised in that** the channel (6) guiding the steam is partly formed by the wall (10) of the bowl (3) while the other part of the pipe is formed by a concave portion (12) in the wall (11) of the basket (4).

3. A food preparation appliance according to one of claims 1 to 2, **characterised in that** the lid (5) has the opening (7) for the inlet of the steam.

4. A food preparation appliance according to one of claims 1 to 3, **characterised in that** the through hole (8) for discharging the steam is located in the lid (5).

5. A food preparation appliance according to one of claims 1 to 4, **characterised in that** the bowl (3) and the basket (4) each comprise orientation means (15) opposite each other.

6. A food preparation appliance according to one of claims 1 to 5, **characterised in that** the bowl (3) and the basket (4) each comprise bearing means (18) opposite each other.

7. A food preparation appliance according to one of claims 1 to 6, **characterised in that** the bowl (3) is equipped in its lower portion with a rotary mixer knife (30), this knife (30) being driven by an electric motor integrated into the fixed base (9) of the appliance.
